# EUROPEAN PATENT APPLICATION

(11) **EP 4 318 864 A1**
(43) Date of publication of application: **07.02.2024**
(21) Application number: 22884018.7
(22) Date of filing: 19.10.2022
(51) Int. Cl.: H02J 7/00, H01M 10/04

(54) **JIG DEVICE FOR CHARGING AND DISCHARGING SECONDARY BATTERY**

(30) Priority: 20.10.2021 KR 20210140155
(71) Applicant: LG ENERGY SOLUTION, LTD., Seoul 07335 (KR)
(72) Inventor: KWON, Hyunjung, Daejeon 34122 (KR); SON, Ju Hwan, Daejeon 34122 (KR); YUN, Seongmin, Daejeon 34122 (KR)
(74) Representative: Goddar, Heinz J.
(86) International application number: PCT/KR2022/015936
(87) International publication number: WO 2023/068796

(57) **Abstract**

A charging and discharging jig device according to the present disclosure includes a pair of pressing jigs, and an auxiliary pressing member provided between opposing surfaces of the pair of pressing jigs, wherein the auxiliary pressing member presses a sliding area of the battery cell when a battery cell is disposed between the pair of press jigs.

## Description

### [TECHNICAL FIELD]

### Cross Citation with Related Application(s)

This application claims the benefit of Korean Patent Application No. 10-2021-0140155 filed on October 20, 2021 and Korean Patent Application No. 10-2022-0134616 filed on October 19, 2022 in the Korean Intellectual Property Office, the entire contents of which are incorporated herein by reference.

The present disclosure relates to a jig device for charging and discharging a secondary battery, and more particularly, to a jig device for charging and discharging a secondary battery that can apply uniform pressure to the body area and the sliding area of a battery cell.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

A lithium secondary battery is manufactured in the order of an electrode manufacturing process of manufacturing an electrode, an assembly process of manufacturing an electrode assembly by interposing the electrode and a separator, and incorporating it in a secondary battery case together with an electrolyte to manufacture a secondary battery, and an activation process for exhibiting the manufactured secondary battery.

Among them, in the activation process, a battery cell is mounted on a predetermined jig, and charged and discharged under conditions necessary for activation.

Meanwhile, the electrode assembly mounted in the battery case is a power generating element, having a cathode/separator/anode stack structure, which can be charged and discharged, and includes a jelly roll type electrode assembly, a stacked type (laminated type) electrode assembly, a stacked/folded type electrode assembly, and the like.

Such an electrode assembly is coated with a predetermined pattern and a predetermined thickness of an electrode active material slurry onto an electrode current collector through a slot die that defines an electrode active material slurry prepared by a mixing process, and then dried. However, since the electrode active material slurry is a fluid, it has a property of flowing down after coating, and the flowing down of the electrode active material slurry is called sliding. Such a sliding may frequently occur at both end portions in the width direction of the coating portion coated with the electrode active material.

Fig. 1 is a plan view and a cross-sectional view showing a sliding area.

Fig. 2 is a diagram showing a battery cell, and Fig. 3 is a diagram showing an example in which a battery cell is provided in a charging/discharging jig device.

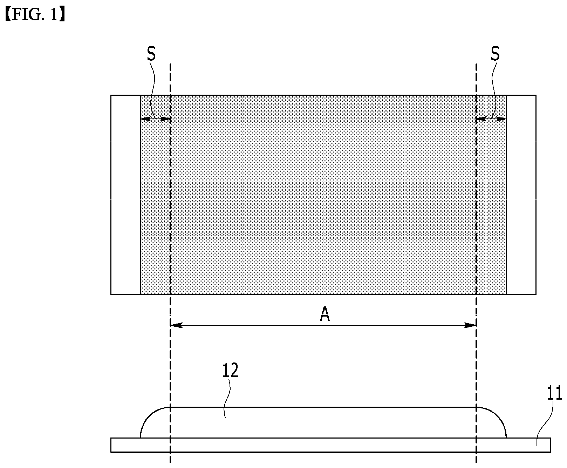

Referring to Fig. 1, the sliding area means an area in which the thickness of the electrode mixture layer becomes thinner as distance separates far from the central side of the coating portion, and the thickness of the electrode mixture layer becomes thicker as it is closer to the central side of the coating portion. Meanwhile, as shown in Fig. 1, the portion A excluding the sliding area S has a value where the thickness of the electrode mixture layer is larger than the sliding area S.

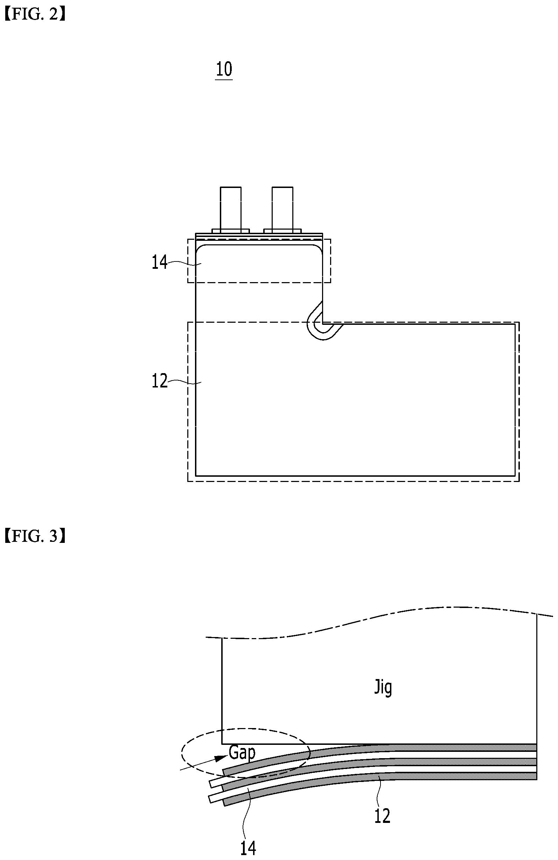

Referring to Fig. 2, the battery cell 10 includes a body area 12 corresponding to an electrode mixture layer area A (see Fig. 1) in which separators and electrodes are alternately stacked, and a sliding area 14 corresponding to a part of the sliding area S (see Fig. 1). The sliding area 14 shown in Fig. 2 means a portion where an electrode tab is connected to an electrode within the sliding area S. The sliding area 14 may have a thickness slightly lower than that of the body area 12 because the sliding phenomenon of the electrode active material applied according to the process as described above may appear.

Referring to Fig. 3, in the activation process, since the battery cell 10 repeats charging and discharging, a phenomenon in which a part of the battery cell 10 swells may appear, wherein the charging/discharging jig device can limit the volume change of the battery cell during charging/discharging to a fixed range by applying pressure to one side of the battery cell. However, the sliding area 14 has a smaller thickness value compared with the body area 12, and the pressing surface of the jig device has a flat shape. Therefore, there is a problem that a gap is generated between the sliding area 14 and the jig device, and different pressures are applied to the body area 12 and the sliding area 14.

Therefore, there is a need for a charging/discharging jig device capable of making the distribution of pressure applied to battery cells more uniform.

### [DETAILED DESCRIPTION OF THE INVENTION]

### [Technical Problem]

It is an object of the present disclosure to provide a charging/discharging jig device that can evenly pressurize battery cells.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a charging and discharging jig device comprising: a pair of pressing jigs, and an auxiliary pressing member provided between opposing surfaces of the pair of pressing jigs, wherein the auxiliary pressing member presses a sliding area of the battery cell when a battery cell is disposed between the pair of press jigs.

The auxiliary pressing member may provide a step that protrudes toward the battery cell from opposing surfaces of the pair of pressing jigs.

The auxiliary pressing member may press a portion where an electrode and an electrode tab are connected within the sliding area of the battery cell.

The auxiliary pressing member may have a tape or band shape and may be disposed to be in parallel to one end of the pair of pressing jigs.

The charging and discharging jig device may further comprise a pressing pad that is located on at least one surface of the opposing surface of the pair of pressing jigs to buffer the pressure applied to the body area of the battery cell.

The auxiliary pressing member may be located on the pressing pad.

The pressing pads are provided as a pair and are respectively located on both surfaces opposing to each other of the pair of pressing jigs, and the auxiliary pressing members are provided as a pair and may be respectively located on both surfaces opposite to each other of the pair of pressing pads.

A body area of the battery cell may be spaced apart from the auxiliary pressing member.

The auxiliary pressing member may be located so as to cover 40% to 100% of the width of the sliding area.

The auxiliary pressing member may be located so as to cover 60% to 80% of the width of the sliding area.

The auxiliary pressing member may be made of a material having a higher hardness than that of the pressing pad.

The auxiliary pressing member may be made of silicon.

The pressing jig may be made of stainless-steel.

A protective paper may be located between the auxiliary pressing member and the pressing pad.

The thickness of the auxiliary pressing member may be greater than 30 um.

The thickness of the auxiliary pressing member may be 31 um or more.

### [Advantageous Effects]

According to embodiments, the charging and discharging jig device of the present disclosure can form a step on the pressing surface to thereby make a pressure applied to the battery cell uniform.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

Fig. 1 is a plan view and a cross-sectional view showing a sliding area;
Fig. 2 is a diagram showing a battery cell;
Fig. 3 is a diagram showing an example in which a battery cell is provided in a charging/discharging jig device;

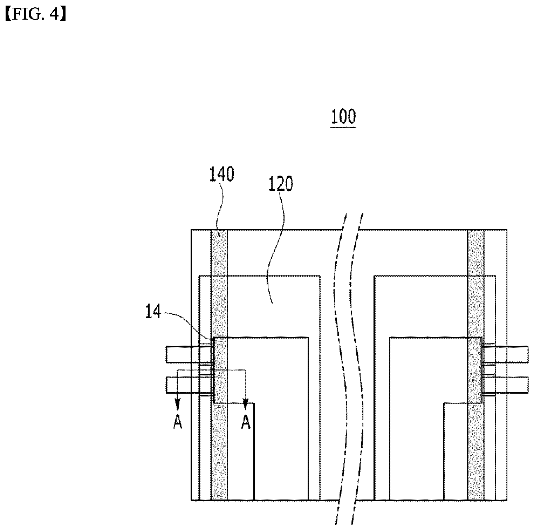

Fig. 4 is a diagram showing a charging and discharging jig device according to one embodiment of the present disclosure;

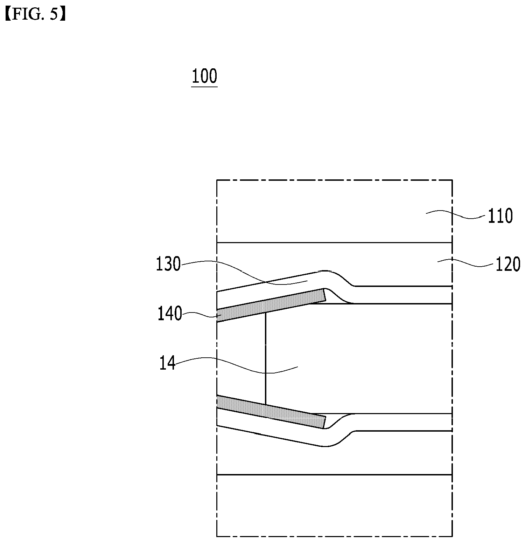

Fig. 5 is a cross-sectional view taken along the cutting line A-A of Fig. 4;

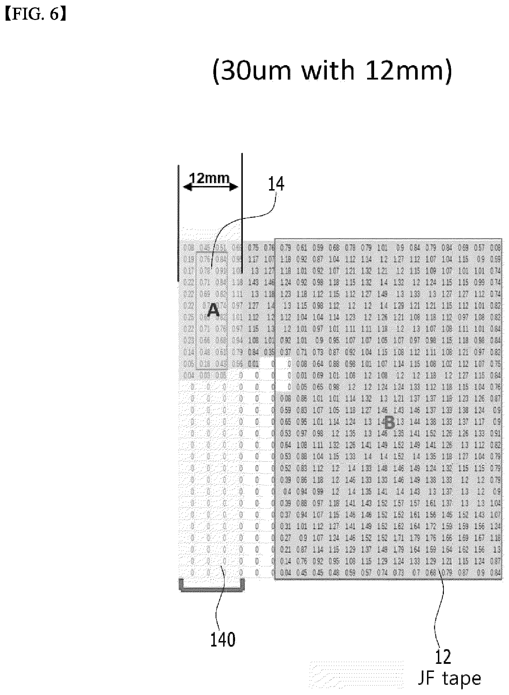

Figs. 6 to 8 are diagrams showing examples of auxiliary pressing members provided in the charging and discharging jig device according to one embodiment of the present disclosure;

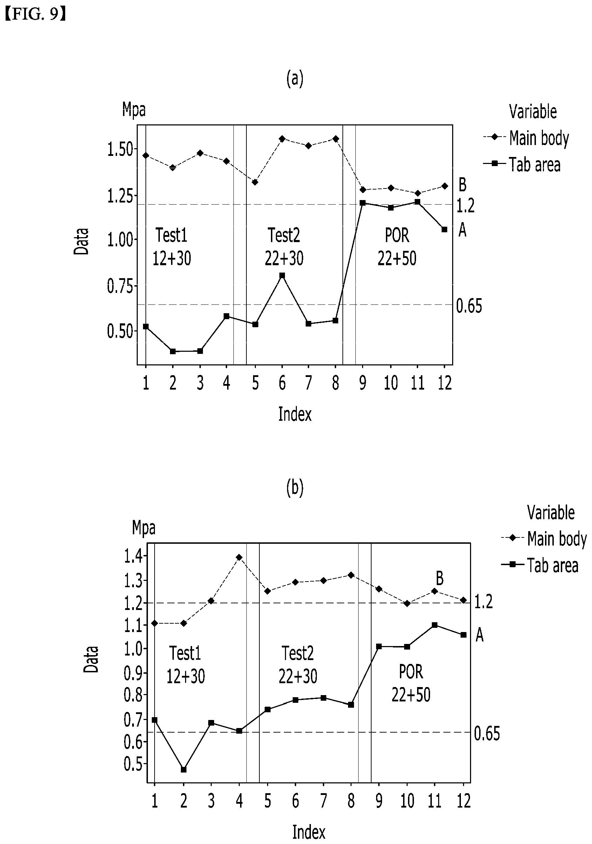

Fig. 9 is a graph showing test results for the examples of Fig. 6 to 8;

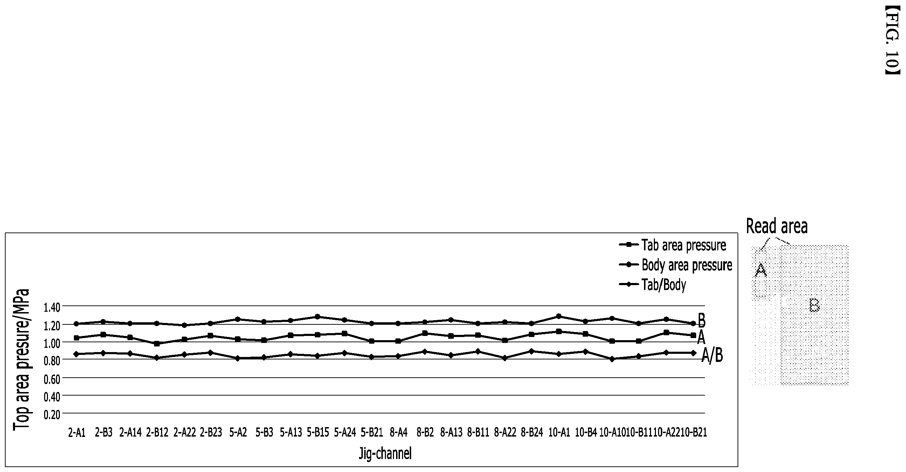

Fig. 10 is another graph showing test results for the examples of Figs. 6 to 8; and

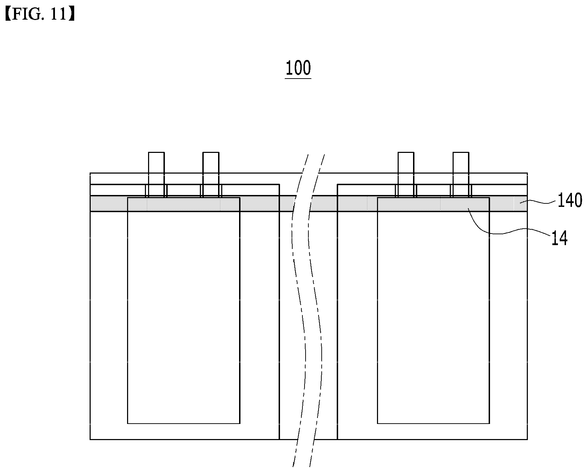

Fig. 11 is a diagram showing a charging and discharging jig device according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity. Meanwhile, similarly to the case where it is described as being disposed "on" or "above" another part, the case where it is described as being disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, a charging and discharging jig device according to one embodiment of the present disclosure will be described.

First, in the present disclosure, the sliding area S should be understood as a concept including an area where the flatness of the electrode mixture layer is reduced and its peripheral portion in the vicinity of the boundary between the coating portion and the non-coating portion. For details, refer to the description related to Fig. 1.

Also, in the present disclosure, the "sliding area 14" means a portion where the electrode tab is connected to the electrode among the sliding area S. That is, in the present disclosure, an embodiment of the sliding area 14 located in the portion where the electrode tab is connected to the electrode among the sliding area S will be described.

Among the portion where the electrode tab is connected to the electrode, the sliding area 14 may have a thickness slightly lower than that of the body area 12 because the sliding phenomenon of the electrode active material applied according to the process as described above with reference to Fig. 2 may appear.

Fig. 4 is a diagram showing a charging and discharging jig device according to one embodiment of the present disclosure. Fig. 5 is a cross-sectional view taken along the cutting line A-A of Fig. 4.

In the embodiment of Fig. 4, a charging and discharging jig device for pressing the L-shaped battery cell 10 of Fig. 2 is shown as an example. Referring to Figs. 4 and 5, the charging and discharging jig device 100 of the present embodiment includes a pair of pressing jigs 110, a pressing pad 120 located on the opposing surfaces of the pair of pressing jigs 110, and an auxiliary pressing member 140 provided on the pressing pad 120. Here, a protective paper 130 for covering one surface of the pressing pad 120 may be located between the pressing pad 120 and the auxiliary pressing member 140.

The charging and discharging jig device 100 of the present embodiment may be used in an activation process of a secondary battery. The charging and discharging jig device 100 of the present embodiment is for limiting the volume change of the battery cell 10 that occurs during the activation process to a fixed range, and can may press one surface and the other surface of the battery cell 10, respectively.

The pressing jig 110 is configured to apply pressure to the battery cell 10 and may be formed of a hard material such as metal. For example, the pressing jig 110 may be made of a material that is hard and has strong heat resistance, such as stainless steel.

The pressing jig 110 may be provided as a pair, and the battery cells 10 may be disposed between the opposing surfaces of the pair of pressing jigs 110. When the volume of the battery cell 10 increases by the activation process, the pressing jig 110 presses one surface and the other surface of the battery cell 10 to thereby limit the change in volume of the battery cell 10 to a fixed range.

The pressing pad 120 may be configured to prevent the pressing jig 110 from excessively pressing the battery cell 10. The pressing pad 120 can buffer the pressure applied to the battery cell 10 from the pressing jig 110 and prevent the battery cell 10 from being damaged by the pressing jig 110. The pressing pad 120 can be made of an elastic material such as silicon.

The pressing pad 120 may be provided on one surface of the pressing jig 110. The pressing pads 120 are disposed on opposing surfaces of the pair of pressing jigs 110, and pressure applied to the battery cell 10 by the pressing jig 110 can be transmitted through the pressing pad 120. The pressing pads 120 may be provided to each of the pair of pressing jigs 110. The pressing pads 120 may be provided as a pair.

The protective paper 130 may be configured to prevent the battery cell 10 from being damaged when the charging and discharging jig device 100 and the battery cell 10 come into contact with each other. The protective paper 130 may be provided on one surface of the pressing pad 120. The protective paper 130 may be provided on one surface of the pressing pad 120 facing the battery cell 10.

Meanwhile, the charging and discharging jig device 100 of the present embodiment may include an auxiliary pressing member 140 that prevents pressure from being uniformly transmitted to the battery cell 10 due to a difference in thickness between the body area 12 and the sliding area 14 of the battery cell 10. The auxiliary pressing member 140 according to the present disclosure presses the sliding area S of the battery cell, when the battery cell 10 is disposed between the pair of pressing jigs 110. In addition, in the present embodiment, the case where the auxiliary pressing member 140 presses the sliding area 14 corresponding to the portion where the electrode tab is connected to the electrode within the sliding area S will be described as an embodiment.

The auxiliary pressing member 140 may also be referred to as a jig formation tape. That is, the auxiliary pressing member 140 has a tape shape or a band shape. Further, the auxiliary pressing member 140 is disposed to be in parallel to one end of the pair of pressing jigs 110.

The auxiliary pressing member 140 may be for eliminating the thickness difference between the body area 12 and the sliding area 14 of the battery cell 10. The auxiliary pressing member 140 is for forming a step that protrudes toward the battery cell 10 on one surface of the charging and discharging jig device 100 so that an even pressure is applied from the pressing jig 110 to the battery cell 10.

The auxiliary pressing member 140 can be provided on one surface of the charging and discharging jig device 100 facing the battery cell 10 to form a step on the pressing surface of the charging and discharging jig device 100. The auxiliary pressing member 140 can be provided on one surface of the protective paper 130 facing the battery cell 10 as shown in Fig. 5, but can also be provided on one surface of the pressing pad 120. When the auxiliary pressuring member 140 is provided on one surface of the pressing pad 120 or on one surface of the protective paper 130 in this way, the position of the auxiliary pressing member 140 is slightly adjusted by the pressing pad 120 when the charging and discharging jig device 100 presses the battery cell 10, whereby it is possible to prevent the auxiliary pressing member 140 from excessively pressing the battery cell 10 or damaging the battery cell 10. This may be because the auxiliary pressing member 140 is made of a hard material having a higher hardness or a material having lower elasticity than the pressing pad 120 or the protective paper 130.

The auxiliary pressing member 140 may be disposed to correspond to the sliding area 14 of the battery cell 10. The auxiliary pressing member 140 may be disposed to be spaced apart from the body area 12 of the battery cell 10. As shown in Fig. 5, the auxiliary pressing member 140 forms a step in the area corresponding to the sliding area 14 within the pressing surfaces of the charging and discharging jig device 100, so that pressure can be transmitted from the pressing jig 110 to the sliding area 14 having a relatively low thickness.

The auxiliary pressing member 140 may be preferably provided so as to cover 40% or more of the width of the sliding area 14. The auxiliary pressing member 140 may preferably be provided so as to cover 40% to 100%, 50% to 90%, or 60% to 80% of the width of the sliding area 14. The auxiliary pressing member 140 is for eliminating an uneven pressure gradient applied from the charging and discharging jig device 100 due to the sliding of the active material in the sliding area 14, and such numerical values can take the sliding position and size into consideration. Therefore, considering a typical sliding range, the auxiliary pressing member 140 may be preferably so as to cover 60% to 80% of the sliding area 14.

The length, width, and thickness of the auxiliary pressing member 140 may be set differently according to the size or thickness of the sliding area 14. At this time, the length, width, and thickness of the auxiliary pressing member 140 may be preferably set so that the pressure transmitted from the pressing jig 110 to the body area 12 and the pressure transmitted to the sliding area 14 are similar.

Meanwhile, in the above-mentioned embodiment, the case where the L-shaped battery cell 10 shown in Figs. 2 and 4 is pressed has been described, but the present disclosure is not limited to those illustrated, and can be applied to press the battery cell 10 of various shapes. For example, as a charging and discharging jig device according to another embodiment of the present disclosure, a charging and discharging jig device for pressing the battery cell 10 shown in Fig. 11 can be modified and applied. Further, although not shown herein, even if the cathode tab and the anode tab are provided on both ends of the battery cell 10 in directions opposite to each other, various modifications and changes are possible, such as being able to modify and apply the present disclosure.

Further, in the above-mentioned embodiments, the case where the auxiliary pressing member 140 presses the sliding area 14 corresponding to the portion where the electrode tab is connected to the electrode within the sliding area S has been described as embodiments, but the present disclosure is not limited thereto, and it is sufficient if the auxiliary pressing member 140 presses the sliding area S of another part of the battery cell. The present disclosure can be modified, changed and applied to match various environments in which the present disclosure is carried out.

Next, a test for the auxiliary pressing member provided in the charging and discharging jig device according to one embodiment of the present disclosure will be described.

Figs. 6 to 8 are diagrams showing examples of auxiliary pressing members provided in the charging and discharging jig device according to one embodiment of the present disclosure. Fig. 9 is a graph showing test results for the examples of Fig. 6 to 8. Fig. 10 is another graph showing test results for the examples of Figs. 6 to 8. In Figs. 6 to 8, JF tape is an abbreviation of jig formation tape and may refer to the auxiliary pressing member 140.

Referring to Figs. 6 to 8, the auxiliary pressing member 140 can be provided so as to cover a part of the sliding area 14. The auxiliary pressing member 140 can be provided so as to cover 60% to 80% of the sliding area 14. In the case of the battery cell 10 illustrated in Figs. 6 to 8, the width of the sliding area 14 is 20 mm, the minimum width of the auxiliary pressing member 140 is 12 mm, and the auxiliary pressing member 140 is illustrated as covering 60% of the sliding area 14.

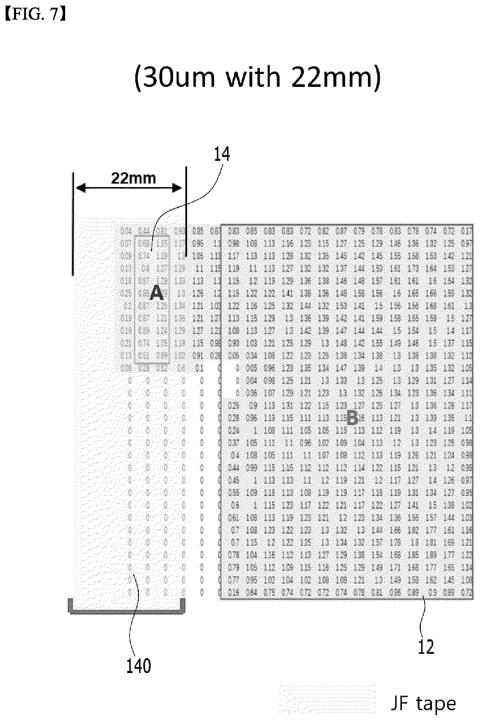

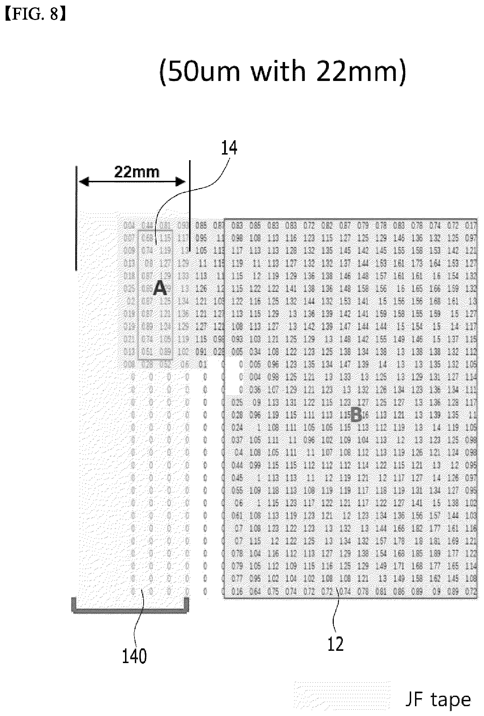

The position or size of the auxiliary pressing member 140 provided in the charging and discharging jig device 100 may vary. The auxiliary pressing member 140 may be provided only in a portion corresponding to the sliding area 14 as shown in Fig. 6, and it can be provided to corresponds to the sliding area 14, but cover up to a portion where the sliding area 14 is not located as shown in Figs. 7 and 8. Further, the auxiliary pressing member 140 may be provided so as to have a slightly narrow width as shown in Fig. 6, and it may be provided to have a slightly wide width value as shown in Figs. 7 and 8. Further, the auxiliary pressing member 140 may be provided so as to have a slightly smaller thickness value as shown in Figs. 6 and 7, or it may be provided to have a slightly larger thickness value as shown in Fig. 8. Specifically, Fig. 6 is illustrated as having a thickness of 30 µm and a width of 12 mm, Fig. 7 is illustrated as having a thickness of 30 µm and a width of 22 mm, and Fig. 8 is illustrated as having a thickness of 50 µm and a width of 22 mm.

Referring to Fig. 9, a difference in pressure values applied to the body area 12 and the sliding area 14 of the examples shown in Figs. 6 to 8 can be compared. At this time, each value of the horizontal axis indicated by the index in Fig. 9 means each battery cell 10 used in the test, and the vertical axis is the surface pressure, and the unit may be MPa.

Further, Fig. 9(a) and Fig. 9(b) show the results of each test performed on the battery cell 10 using the charging and discharging jig device 100. In Fig. 9, the results for Figs. 6, 7, and 8 are indicated as 'Test1 12+30', 'Test2 22+30', and 'POR 22+50', respectively.

Referring to the test results of Fig. 7, in Figs. 6 and 7, it was confirmed that the pressure values applied to the body area 12 and the sliding area 14 show a difference of more than two times. However, in Fig. 8, it was confirmed that pressure values applied to the body area 12 and the sliding area 14 are slightly similar when compared with Figs. 6 and 7.

Specifically, the pressure value of the sliding area 14 is shown to be about 0.5 Mpa in FIG. 6, but about 0.65 Mpa in Fig. 7 and about 1.0 Mpa in Fig. 8. At this time, the pressure value of the body area 12 in Figs. 6, 7, and 8 is shown to be about 1.2 Mpa. Therefore, it was confirmed that by applying the auxiliary pressing member 140, the pressure value of the sliding area 14 can be increased to 80% or more, or from 80% to 100% of the pressure value of the body area 12, and a difference in pressure applied between the body area 12 and the sliding area 14 through the auxiliary pressing member 140 can be minimized.

Further, referring to the above-mentioned results, the thickness of the auxiliary pressing member 140 may be larger than 30 µm, or may be 31 µm or more. However, this is not necessarily the case, and may vary depending on the size of the battery cell 10, the overall thickness, or the specifications of the charging and discharging jig device 100.

Referring to Fig. 10, a difference in pressure values applied to the body area 12 and the sliding area 14 of the examples shown in Fig. 8 may be compared in more detail. At this time, in Fig. 10, the horizontal axis may be the measurement position, the vertical axis may be the surface pressure, and the unit may be MPa.

Referring to the test results of Fig. 10, it is confirmed that the pressure distribution applied to the body area 12 and the sliding area 14 of Fig. 8 is uniform. Therefore, when the charging and discharging jig device 100 of the present embodiment is used, not only the difference in pressure applied between the body area12 and the sliding area 14 is minimized, but also pressure deviation occurring in accordance with positions in each of the body area 12 and the sliding area 14 can be minimized.

Specifically, the pressure applied to the sliding area 14 was about 86% of the pressure applied to the body area 12, and the deviation occurring in accordance with the position was about 0.03.

Moreover, the pressure applied to the sliding area 14 was about 1.05 Mpa, and the deviation occurring in accordance with the position was about 0.04, and the pressure applied to the body area 12 was about 1.23 Mpa, and the deviation occurring in accordance with to the position was about 0.03.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

10: battery cell
12: body area
14: sliding area
100: charging and discharging jig device
110: pressing jig
120: pressing pad
130: protective paper
140: auxiliary pressing member

## Claims

1. A charging and discharging jig device comprising:
a pair of pressing jigs, and
an auxiliary pressing member provided between opposing surfaces of the pair of pressing jigs,
wherein the auxiliary pressing member presses a sliding area of the battery cell when a battery cell is disposed between the pair of press jigs.

2. The charging and discharging jig device according to claim 1, wherein:
the auxiliary pressing member provides a step that protrudes toward the battery cell from opposing surfaces of the pair of pressing jigs.

3. The charging and discharging jig device according to claim 1, wherein:
the auxiliary pressing member presses a portion where an electrode and an electrode tab are connected within the sliding area of the battery cell.

4. The charging and discharging jig device according to claim 1, wherein:
the auxiliary pressing member presses has a tape or band shape, and is disposed to be in parallel to one end of the pair of pressing jigs.

5. The charging and discharging jig device according to claim 1, further comprising:
a pressing pad that is located on at least one surface of the opposing surface of the pair of pressing jigs to buffer the pressure applied to the body area of the battery cell,
wherein the auxiliary pressing member is located on the pressing pad.

6. The charging and discharging jig device according to claim 5, wherein:
the pressing pads are provided as a pair and are respectively located on both surfaces opposing to each other of the pair of pressing jigs, and
the auxiliary pressing members are provided as a pair and are respectively located on both surfaces opposite to each other of the pair of pressing pads.

7. The charging and discharging jig device according to claim 1, wherein:
a body area of the battery cell is spaced apart from the auxiliary pressing member.

8. The charging and discharging jig device according to claim 1, wherein:
the auxiliary pressing member is located so as to cover 40% to 100% of the width of the sliding area.

9. The charging and discharging jig device according to claim 1, wherein:
the auxiliary pressing member is located so as to cover 60% to 80% of the width of the sliding area.

10. The charging and discharging jig device according to claim 6, wherein:
the auxiliary pressing member is made of a material having a higher hardness than that of the pressing pad.

11. The charging and discharging jig device according to claim 6, wherein:
the pressing pad is made of silicone.

12. The charging and discharging jig device according to claim 1, wherein:
the pressing jig is made of stainless-steel.

13. The charging and discharging jig device according to claim 1, further comprising:
a protective paper located between the auxiliary pressing member and the pressing pad.
